# EUROPEAN PATENT APPLICATION

(11) **EP 4 057 440 A1**
(43) Date of publication of application: **14.09.2022**
(21) Application number: 20890941.6
(22) Date of filing: 19.11.2020
(51) Int. Cl.: H01M 50/636, H01M 10/04

(54) **BATTERY, BATTERY MODULE, BATTERY PACK, AND AUTOMOBILE**

(30) Priority: 22.11.2019 CN 201911158918
(71) Applicant: BYD Company Limited, Shenzhen, Guangdong 518118 (CN)
(72) Inventor: SUN, Huajun, Shenzhen, Guangdong 518118 (CN); ZHU, Yan, Shenzhen, Guangdong 518118 (CN); WANG, Xinyue, Shenzhen, Guangdong 518118 (CN)
(74) Representative: Hoffmann Eitle
(86) International application number: PCT/CN2020/130024
(87) International publication number: WO 2021/098760

(57) **Abstract**

This application provides a battery (100), which comprises a housing (1) and a plurality of accommodating cavities (11) located in the housing (1), wherein two adjacent accommodating cavities (11) are isolated by a partition plate, an electrode core assembly (2) comprising at least one electrode core is arranged in the accommodating cavity (11), and a plurality of electrode core assemblies (2) are sequentially arranged along a first direction and connected in series. A liquid guide hole and a gas guide hole are provided on the partition plate, wherein the liquid guide hole and the gas guide hole are used to bring two adjacent accommodating cavities (11) at both sides of the partition plate into communication. The battery (100) also includes a blocking mechanism that enables the liquid guide hole to be in a settable state comprising an open state and a closed state.

## Description

### CROSS-REFERENCE TO RELATED APPLICATIONS

This application claims priority to Chinese Patent Application No. "201911158918.8" entitled "Battery, battery module, battery pack and vehicle" filed by BYD Company Limited on November 22, 2019.

### FIELD

This application relates to the field of batteries, and particularly to a battery, a battery module, a battery pack, and a vehicle.

### BACKGROUND

With the continuous popularization of new energy vehicles, the requirements raised for use of power batteries in new energy vehicles are becoming increasingly higher. In particular, the users' requirements for the mile range of new energy vehicles becomes increasingly higher. For battery packs in new energy vehicles, the overall capacity needs to be continuously increased. Moreover, during the operation of a power battery pack, the internal consumption caused by internal resistance is required to be reduced as much as possible.

Existing new energy vehicle generally has a width of 1 meter or more, and a length of few meters. The power battery packs for new energy vehicles are generally arranged at the bottom of new energy vehicles. Currently, commercially available power battery packs generally have a roughly same width as the width of new energy vehicles, which is over 1 meter. A length is generally 2 meters or more and is determined by the space reserved at the bottom of new energy vehicles. On the whole, the power battery pack is more than 1 meter in both the length and width. At present, the length of a commercially available cell is generally about 0.3 meter, at least 3 or even more cells are thus needed to be arranged in the power battery pack.

For the side-by-side arrangement of a plurality of cells, a fixing structure needs to be added to each single cell. Moreover, an external power connector is required for power connection of two adjacent single cells. As a result, structural members for the cells have been increased, causing increased cost, and elevated overall weight. Moreover, within the battery pack, the mounting structures occupy a lot of internal space of the battery pack, causing the overall capacity of the power battery pack to decrease. As the number of cells arranged side by side increases, more space is wasted. In addition, multiple external power connectors are required to be arranged for power connection, leading to increased internal resistance, and elevated internal consumption of the power battery pack in use.

### SUMMARY

To solve the above mentioned problems, an object of this application is to provide a battery that allows the injection of an electrolyte into each cavity, while various cavities are ensured to be isolated, a battery module, a battery pack, and a vehicle.

To solve the above technical problems, the following technical schemes are employed in this application.

A battery is provided, which includes a housing and a number of accommodating cavities arranged in the housing. Two adjacent accommodating cavities are isolated by a partition plate, an electrode core assembly including at least one electrode core is arranged in the accommodating cavity, and a number of electrode core assemblies are sequentially arranged along a first direction and connected in series. A liquid guide hole and a gas guide hole are provided on the partition plate. The liquid guide hole and the gas guide hole bring two adjacent accommodating cavities at both sides of the partition plate into communication. The battery also includes a blocking mechanism that enables the liquid guide hole to be in a settable state including an open state and a closed state.

In an embodiment of this application, the housing has an integral structure extending along the first direction. The number of partition plates are arranged in the housing at intervals. A side periphery of the partition plate is closely attached and fits to a side wall of the housing to divide the interior of the housing into a number of accommodating cavities. A cavity wall of the accommodating cavity includes the partition plate or an end cover located at an end of the accommodating cavity, and the housing between two adjacent partition plates or between the partition plate and the end cover.

In an embodiment of this application, the housing is an integral structure extending along the first direction. A battery core assembly is provided in the housing, which includes a separator and the partition plates. The accommodating cavities are arranged inside the separator, the partition plates are arranged in the separator at intervals, and a side periphery of the partition plate fits with the separator to divide the interior of the separator into a number of accommodating cavities. A cavity wall of the accommodating cavity includes the partition plate or an end cover located at an end of the accommodating cavity, and the separator located between two adjacent partition plates or between the partition plate and the end cover.

In an embodiment of this application, the housing has an integral structure extending along the first direction. A battery core assembly is provided in the housing, which includes a separator and the partition plates. The accommodating cavities are located inside the separator, the separator includes a number of sub-separators arranged along the first direction. The partition plate is connected to two adjacent sub-separators at the same time. Two adjacent accommodating cavities share the same partition plate. A cavity wall of the accommodating cavity includes the sub-separator and the partition plate or an end cover located at an end of the sub-separator.

In an embodiment of this application, the housing includes a number of sub-housings arranged along the first direction, the partition plate is connected to two adjacent sub-housings at the same time, two adjacent accommodating cavities share the same partition plate, and a cavity wall of the accommodating cavity includes the sub-housing and the partition plate or an end cover located at an end of the sub-housing.

In an embodiment of this application, the battery is generally a cuboid, having a length, a width and a thickness, where the length is greater than the width, and the width is greater than the thickness. The gas guide hole and the liquid guide hole are arranged on the partition plate at intervals along the width direction.

In an embodiment of this application, when the blocking mechanism is in a first state, the liquid guide hole is in the open state; and when the blocking mechanism is in a second state, the liquid guide hole is in the closed state, where the blocking mechanism is switchable between the first state and the second state.

In an embodiment of this application, before or during electrolyte injection into the battery, the blocking mechanism is in the first state, the liquid guide hole is in the open state, and the liquid guide hole brings two adjacent accommodating cavities at both sides of the partition plate into communication. After the electrolyte is injected into the battery, the blocking mechanism is switched from the first state to the second state, and the blocking mechanism closes the liquid guide hole, such that the liquid guide hole is in the closed state.

In an embodiment of this application, during formation of the battery after electrolyte injection, the blocking mechanism is in the first state, the liquid guide hole is in the open state, and the liquid guide hole brings two adjacent accommodating cavities at both sides of the partition plate into communication. After electrolyte injection and formation of the battery, the blocking mechanism is switched from the first state to the second state, and the blocking mechanism closes the liquid guide hole, such that the liquid guide hole is in the closed state.

In an embodiment of this application, when the liquid guide hole is in the closed state, the blocking mechanism is at least partially located at the liquid guide hole, and the blocking mechanism closes the liquid guide hole, to block the communication between the two adjacent accommodating cavities via the liquid guide hole.

In an embodiment of this application, the first state is such that the blocking mechanism is located at a first position in the battery; and the second state is such that the blocking mechanism is located at a second position in the battery.

In an embodiment of this application, the partition plate has a blocking mechanism holding space provided thereon, wherein the blocking mechanism is held in the blocking mechanism holding space. The blocking mechanism holding space is formed with the first position and the second position, and the blocking mechanism is movable between the first position and the second position under a force. When the blocking mechanism is at the first position, the liquid guide hole is in the open state, and the liquid guide hole brings two adjacent accommodating cavities into communication. When the blocking mechanism is at the second position, the blocking mechanism closes the liquid guide hole, such that the liquid guide hole is in the closed state, to block the communication between the two adjacent accommodating cavities via the liquid guide hole.

In an embodiment of this application, the blocking mechanism holding space is arranged to intersect the liquid guide hole, the liquid guide hole is divided into a first liquid guide hole and a second liquid guide hole by the blocking mechanism holding space, and both the first liquid guide hole and the second liquid guide hole communicate with the blocking mechanism holding space.

In an embodiment of this application, the blocking mechanism is attached to an inner wall of the blocking mechanism holding space by interference fit.

In an embodiment of this application, the blocking mechanism is a magnetic body with magnetism.

In an embodiment of this application, the blocking mechanism is externally sheathed with an elastic sleeve.

In an embodiment of this application, each of the electrode core assemblies includes a first electrode lead-out part and a second electrode lead-out part for current output. The first electrode lead-out part and the second electrode lead-out part of at least one electrode core assembly are respectively arranged on two opposite sides of the electrode core assembly along the first direction. The length direction of the electrode core assembly extends along the first direction.

In an embodiment of this application, the battery also includes a gas guide hole blocking mechanism, which enables the gas guide hole to be in a settable state, including an open state and a closed state.

In an embodiment of this application, before or during electrolyte injection into the battery, or during formation after electrolyte injection, the gas guide hole blocking mechanism enables the gas guide hole to be in the open state, and the gas guide hole brings two adjacent accommodating cavities on both sides of the partition plate into communication.

In an embodiment of this application, after electrolyte injection into the battery, the gas guide hole blocking mechanism closes the gas guide hole, such that the gas guide hole is in the closed state. When the battery is overcharged or short-circuited, the gas guide hole blocking mechanism enables the gas guide hole to be in the open state, and the gas guide hole brings two adjacent accommodating cavities on both sides of the partition plate into communication.

In an embodiment of this application, two adjacent electrode core assemblies are serially connected by an electrode core connector, and the electrode core connector runs through the partition plate between the two adjacent electrode core assemblies.

In an embodiment of this application, the electrode core connector is integrally molded with the partition plate.

In an embodiment of this application, the electrode core connector includes a copper connection portion and an aluminum connection portion connected with the copper connection portion, where the copper connection portion and the aluminum connection portion are connected at a position inside the partition plate.

This application also provides a battery, which includes a housing and a plurality of accommodating cavities located in the housing. Two adjacent accommodating cavities are isolated by a partition plate, an electrode core assembly including at least one electrode core is arranged in the accommodating cavity, and a plurality of electrode core assemblies are sequentially arranged along a first direction and connected in series. A liquid guide hole and a gas guide hole are provided on the partition plate, where the liquid guide hole and the gas guide hole are used to bring two adjacent accommodating cavities at both sides of the partition plate into communication. The battery also includes a blocking mechanism that is at least partially located at the liquid guide hole, and closes the liquid guide hole, to block the communication between the two adjacent accommodating cavities via the liquid guide hole.

In an embodiment of this application, the housing has an integral structure extending along the first direction. The number of partition plates are arranged in the housing at intervals, and a side periphery of the partition plate is closely attached and fits to a side wall of the housing to divide the interior of the housing into a plurality of accommodating cavities. A cavity wall of the accommodating cavity includes the partition plate or an end cover located at an end of the accommodating cavity, and the housing located between two adjacent partition plates or between the partition plate and the end cover.

In an embodiment of this application, the housing has an integral structure extending along the first direction. A battery core assembly is provided in the housing, which includes a separator and the partition plates. The accommodating cavities are located inside the separator, the partition plates are arranged in the separator at intervals, and a side periphery of the partition plate fits with the separator to divide the interior of the separator into a plurality of accommodating cavities. A cavity wall of the accommodating cavity includes the partition plate or an end cover located at an end of the accommodating cavity, and the separator located between two adjacent partition plates or between the partition plate and the end cover.

In an embodiment of this application, the housing has an integral structure extending along the first direction. A battery core assembly is provided in the housing, which includes a separator and the partition plates. The accommodating cavities are located inside the separator, the separator includes a plurality of sub-separators arranged along the first direction, the partition plate is connected to two adjacent sub-separators at the same time, two adjacent accommodating cavities share the same partition plate, and a cavity wall of the accommodating cavity includes the sub-separator and the partition plate or an end cover located at an end of the sub-separator.

In an embodiment of this application, at least one of the partition plates has a blocking mechanism holding space provided thereon, where the blocking mechanism is held in the blocking mechanism holding space. The blocking mechanism holding space is formed with a first position and a second position for holding the blocking mechanism, the blocking mechanism is at the second position, and the blocking mechanism can be switched from the second position to the first position or from the first position to the second position under a force.

In an embodiment of this application, the blocking mechanism holding space is arranged to intersect the liquid guide hole, the liquid guide hole is divided into a first liquid guide hole and a second liquid guide hole by the blocking mechanism holding space, and both the first liquid guide hole and the second liquid guide hole communicate with the blocking mechanism holding space.

In an embodiment of this application, the blocking mechanism is a magnetic body with magnetism.

In an embodiment of this application, the blocking mechanism is externally sheathed with an elastic sleeve.

In an embodiment of this application, two adjacent electrode core assemblies are serially connected by an electrode core connector, and the electrode core connector runs through the partition plate between the two adjacent electrode core assemblies.

In an embodiment of this application, the electrode core connector is integrally molded with the partition plate.

In an embodiment of this application, the electrode core connector includes a copper connection portion and an aluminum connection portion connected with the copper connection portion, where the copper connection portion and the aluminum connection portion are connected at a position inside the partition plate.

In an embodiment of this application, each of the electrode core assemblies includes a first electrode lead-out part and a second electrode lead-out part for current output. The first electrode lead-out part and the second electrode lead-out part of at least one electrode core assembly are respectively arranged on two opposite sides of the electrode core assembly along the first direction. The length direction of the electrode core assembly extends along the first direction.

This application also provides a battery module, which includes a plurality of batteries provided in this application.

This application also provides a battery pack, which includes a plurality of batteries provided in this application or a plurality of battery modules provided in this application.

This application also provides a vehicle, which includes a battery module provided in this application or a battery pack provided in this application.

Compared with related art, this application has the following beneficial effects.

According to the battery provided in this application, by arranging a plurality of serially connected electrode core assemblies in the battery housing, the housing and external mounting structures are decreased compared with the existing side-by-side arrangement of a plurality of batteries, thereby improving the space utilization, and ensuring the overall capacity of the battery pack. Moreover, the use of external power connectors is reduced, and a way of connecting the directly adjacent electrode core assemblies in the housing in series is used instead, with no need to consider the connection stability and reliability of the power connector, thus reducing the internal resistance of the connection, and reducing the internal consumption of the battery pack during use. In addition, in this application, the partition plate located between two accommodating cavities is provided with both the liquid guide hole and the gas guide hole, so when an electrolyte is injected, the electrolyte can flow into an adjacent accommodating cavity through the liquid guide hole. Moreover, during the process of electrolyte injection, gas is vented via the gas guide hole, to reduce the electrolyte injection resistance. After the electrolyte injection is completed, the blocking mechanism closes the liquid guide hole. At this time, two adjacent accommodating cavities are isolated from each other, so that the electrolyte will not flow between adjacent accommodating cavities, will not affect each other, and will not be decomposed due to excessive pressure difference, thus ensuring the safety and service life of the battery.

### BRIEF DESCRIPTION OF THE DRAWINGS

FIG. 1 is a schematic cross-sectional view of a battery provided in an embodiment of this application.
FIG. 2 is a schematic view showing the internal structure of an electrode core assembly provided in an embodiment of this application.
FIG. 3 is a schematic exploded view of a battery provided in another embodiment of this application.
FIG. 4 is a schematic exploded view of a battery provided in another embodiment of this application.
FIG. 5 is a schematic view of a battery provided in other embodiments of this application.
FIG. 6 is a schematic cross-sectional view at some positions in a battery provided in other embodiments of this application.
FIG. 7 is a partial schematic cross-sectional view of a battery structure provided in another embodiment of this application that is in an inverted state relative to FIG. 1.
FIG. 8 is a partially enlarged view of Part A shown in FIG. 7.
FIG. 9 is a partial schematic cross-sectional view of the battery structure shown in FIG. 7 from which a blocking mechanism is removed.
FIG. 10 is a partially enlarged view of part B shown in FIG. 9.
FIG. 11 is an exploded structural view of a partition plate of a battery provided in an embodiment of this application that is in an inverted state relative to FIG. 1.
FIG. 12 is an exploded structural view of a partition plate of a battery provided in another embodiment of this application that is in an inverted state relative to FIG. 1.
FIG. 13 is an exploded structural view of a partition plate of a battery provided in another embodiment of this application that is in an inverted state relative to FIG. 1.
FIG. 14 is a schematic cross-sectional view of a battery provided in another embodiment of this application.
FIG. 15 is a schematic structural view of a partition plate having a seal ring of a battery provided in an embodiment of this application that is in an inverted state relative to FIG. 1.
FIG. 16 is a schematic structural view of a partition plate integrally molded with an electrode core connecting piece of a battery provided in an embodiment of this application that is in an inverted state relative to FIG. 1.
FIG. 17 is a schematic view showing an overall structure of a battery provided in an embodiment of this application.
FIG. 18 is a schematic structural view of a battery pack provided in an embodiment of this application.
FIG. 19 is a schematic structural view of a battery module provided in an embodiment of this application.
FIG. 20 is a schematic structural view of a battery pack including a plurality of battery modules provided in an embodiment of this application.
FIG. 21 is a schematic structural view of a vehicle including a battery module provided in an embodiment of this application.
FIG. 22 is a schematic structural view of a vehicle including a battery pack provided in an embodiment of this application.

### Numeral list:

100 battery; 1 housing; 13 end cover; 2 electrode core assembly; 101 sub-housing; 201 electrode core; 202 tab; 203 power connecting zone; 12 partition plate; 121 liquid guide hole; 1211 first liquid guide hole; 1212 second liquid guide hole; 122 blocking mechanism; 150 gas guide hole; 151 gas guide hole blocking mechanism; 1221 elastic sleeve; 1222 magnetic material balls; 125 blocking mechanism holding space; 130 encapsulating structure; 123 intercommunicating hole; 11 accommodating cavity; 3 electrode core connector; 301 copper connection portion; 302 aluminum connection portion; 111 separator; 1111 sub-separator; 300 tray; 200 battery pack; 22 electrode lead-out part; 221 first electrode lead-out part; 222 second electrode lead-out part; 400 battery module; 1000 vehicle.

### DETAILED DESCRIPTION

Embodiments of this application are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain this application and cannot be construed as a limitation to this application.

In the description of this application, it should be understood that orientation or position relationships indicated by the terms such as "length", "width", "above", "below", "front", "back", "left", "right", "vertical", "horizontal", "top", "bottom", "inside", and "outside" are based on orientation or position relationships shown in the accompanying drawings, and are used only for ease and brevity of illustration and description of embodiments of this application, rather than indicating or implying that the mentioned apparatus or component needs to have a particular orientation or needs to be constructed and operated in a particular orientation. Therefore, such terms should not be construed as limiting this application.

In addition, the terms "first" and "second" are used merely for the purpose of description, and shall not be construed as indicating or implying relative importance or implying a quantity of indicated technical features. Therefore, a feature limited by "first" or "second" may explicitly or implicitly include one or more of the features. In the descriptions of this application, "a plurality of' means two or more, unless otherwise definitely and specifically limited.

In the description of this application, unless otherwise explicitly specified or defined, the terms such as "mount", "install", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in this application according to specific situations.

This application provides a battery, which includes a housing and a plurality of accommodating cavities located in the housing. Two adjacent accommodating cavities are isolated by a partition plate, an electrode core assembly including at least one electrode core is arranged in the accommodating cavity; and a plurality of electrode core assemblies are sequentially arranged along a first direction and connected in series. A liquid guide hole and a gas guide hole are provided on the partition plate, where the liquid guide hole and the gas guide hole are used to bring two adjacent accommodating cavities at both sides of the partition plate into communication. The battery also includes a blocking mechanism that enables the liquid guide hole to be in a settable state including an open state and a closed state.

Compared with related art, this application has the following beneficial effects. By arranging a plurality of serially connected electrode core assemblies in the battery housing, the housing and external mounting structures are decreased compared with the existing side-by-side arrangement of a plurality of batteries, thereby improving the space utilization, and ensuring the overall capacity of the battery pack. Moreover, the use of external power connectors is reduced, and a way of connecting the directly adjacent electrode core assemblies in the housing in series is used instead, with no need to consider the connection stability and reliability of the power connector, thus reducing the internal resistance of the connection, and reducing the internal consumption of the battery pack during use. In addition, in this application, the partition plate located between two accommodating cavities is provided with both the liquid guide hole and the gas guide hole, so when an electrolyte is injected, the electrolyte can flow into an adjacent accommodating cavity through the liquid guide hole. Moreover, during the process of electrolyte injection, gas is vented via the gas guide hole, to reduce the electrolyte injection resistance. After the electrolyte injection is completed, the blocking mechanism closes the liquid guide hole. At this time, two adjacent accommodating cavities are isolated from each other, so that the electrolyte will not flow between adjacent accommodating cavities, will not affect each other, and will not be decomposed due to excessive pressure difference, thus ensuring the safety and service life of the battery.

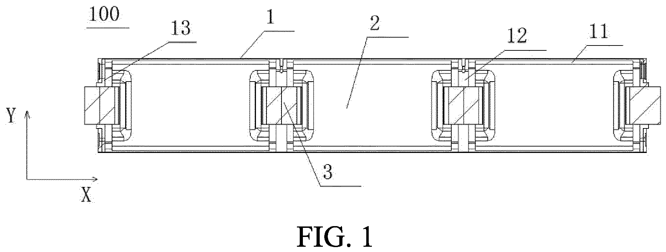

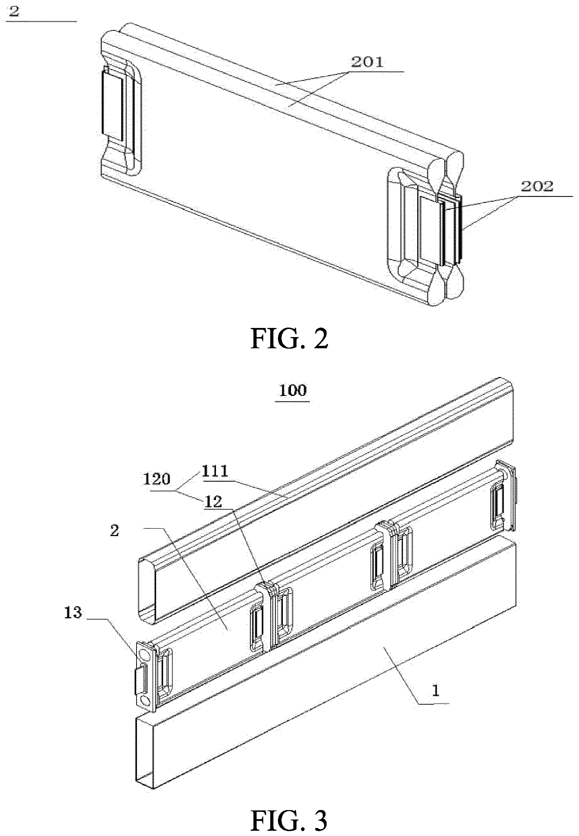

FIG. 1 is a schematic cross-sectional view of a battery 100 provided in this application, and FIG. 2 is a schematic view showing the internal structure of an electrode core assembly 2. Referring to FIGs. 1 and 2, the battery 100 includes a housing 1, and the electrode core assemblies 2. The housing 1 includes a number of accommodating cavities 11 therein, and two adjacent accommodating cavities 11 are isolated by a partition plate 12. Each of the accommodating cavities 11 is provided with the electrode core assembly 2, the electrode core assembly 2 includes at least one electrode core 201, and a number of electrode core assemblies 2 are sequentially arranged along a first direction and connected in series. A liquid guide hole 121 and a gas guide hole 150 are provided on the partition plate 12, where the liquid guide hole 121 and the gas guide hole 150 are used to bring two adjacent accommodating cavities 11 at both sides of the partition plate 12 into communication. The battery 100 also includes a blocking mechanism 122 that enables the liquid guide hole 121 to be in a settable state including an open state and a closed state.

That is, as shown in FIG 1, in this application, the partition plate 12 located between two accommodating cavities 11 is provided with both the liquid guide hole and the gas guide hole 150, such that when an electrolyte is injected, the electrolyte can flow into an adjacent accommodating cavity 11 through the liquid guide hole. Moreover, during the process of electrolyte injection, gas is vented via the gas guide hole 150, to reduce the electrolyte injection resistance. After the electrolyte injection is completed, the blocking mechanism closes the liquid guide hole. At this time, two adjacent accommodating cavities are isolated from each other, so that the electrolyte will not flow between adjacent accommodating cavities, will not affect each other, and will not be decomposed due to excessive pressure difference, thus ensuring the safety and service life of the battery.

As shown in FIG. 1, in an embodiment, the housing 1 has an integral structure extending along the first direction. The plurality of partition plates 12 are arranged in the housing 1 at intervals, and a side periphery of the partition plate 12 is closely attached and fits to a side wall of the housing 1 to divide the interior of the housing 1 into a number of accommodating cavities 11. A cavity wall of the accommodating cavity 11 includes the partition plate 12 or an end cover 13 located at an end of the accommodating cavity 11, and the housing 1 located between two adjacent partition plates 12 or between the partition plate 12 and the end cover 13. That is, the accommodating cavity 11 at an end of the battery 100 along the first direction is an end accommodating cavity, and the accommodating cavity 11 at a middle position of the battery 100 is a middle accommodating cavity. A cavity wall of the end accommodating cavity includes the end cover 13, the partition plate 12 and part of the housing 1 located between the end cover 13 and the partition plate 12. A cavity wall of the middle accommodating cavity includes two adjacent partition plates 12 and part of the housing 1 located between the two adjacent partition plates 12.

The end cover 13 in this application refers to an end cover that is parallel to the partition plate 12 and is located at an end of the housing 1 along the first direction to cover the end.

At least one of the two ends of the housing 1 along the first direction is open, and the end cover 13 is used to cover the open end of the housing and fits to the housing 1 to form a closed structure.

For example, both ends of the housing 1 along the first direction are open, the housing 1 has a cylindrical structure, and both ends of the housing along the first direction are provided with the end covers 13, to cover the opening at both ends of the housing 1.

In this application, the first direction refers to the left to right direction in FIG. 1, that is, the X direction shown in FIG. 1.

In this application, the electrode core 201 is an electrode core commonly used in the field of power batteries, and the electrode core 201 and the electrode core assembly 2 are components inside the housing of the battery 100, and cannot be understood as the battery 100 itself. The electrode core 201 can be a wound electrode core 201, or an electrode core 201 made by lamination. In general, the electrode core 201 at least includes a positive electrode sheet, a diaphragm, a negative electrode sheet and an electrolyte, and the electrode core 201 generally refers to an assembly that is not fully sealed. Thus, the battery mentioned in this application is the battery 100, which cannot simply regarded as a battery module or battery assembly just because it includes a number of electrode cores 201. In this application, the electrode core assembly 2 may be composed of a single electrode core 201 or include at least two electrode cores 201, where the at least two electrode cores 201 are connected in parallel, to form the electrode core assembly 2. For example, two electrode cores 201 are connected in parallel, to form the electrode core assembly 2; or four electrode cores 201 are connected in parallel, to form the electrode core assembly 2.

FIG. 3 is a schematic cross-sectional view of a battery 100 according to another embodiment. In another embodiment, the housing 1 has an integral structure extending along the first direction. A battery core assembly 120 is arranged in the housing 1, which includes a separator 111 and the partition plates 12. The accommodating cavities 11 are located inside the separator 111, the partition plates 12 are arranged in the separator 111 at intervals, and a side periphery of the partition plate 12 fits with the separator 111 to divide the interior of the separator 111 into a number of accommodating cavities 11. A cavity wall of the accommodating cavity 11 includes the partition plate 12 or an end cover 13 located at an end of the accommodating cavity 11, and the separator 111 located between two adjacent partition plates 12 or between the partition plate 12 and the end cover 13. That is, the accommodating cavity 11 at an end of the battery 100 along the first direction is an end accommodating cavity, and the accommodating cavity 11 at a middle position of the battery 100 is a middle accommodating cavity. A cavity wall of the end accommodating cavity includes the end cover 13, the partition plate 12 and part of the separator 111 located between the end cover 13 and the partition plate 12. A cavity wall of the middle accommodating cavity includes two adjacent partition plates 12 and part of the separator 111 located between the two adjacent partition plates 12.

The separator 111 is used to isolate the lithium ions in the electrolyte from the housing 1, to effectively protect lithium ions against contact with the housing 1, reduce the possibility of Li-Al reaction, and improve the safety and reliability of the battery 100 during use. Moreover, the separator 111 is also insulating.

In the embodiment shown in FIG. 3, the separator 111 has an integral structure extending along the first direction, and the separator 111 extends and wraps the peripheral wall of each partition plate 12 and wraps at least part of the peripheral wall of the end cover 13, so that the separator 111 fits with the partition plates 12 and/or the end cover 13 to form a number of accommodating cavities 11.

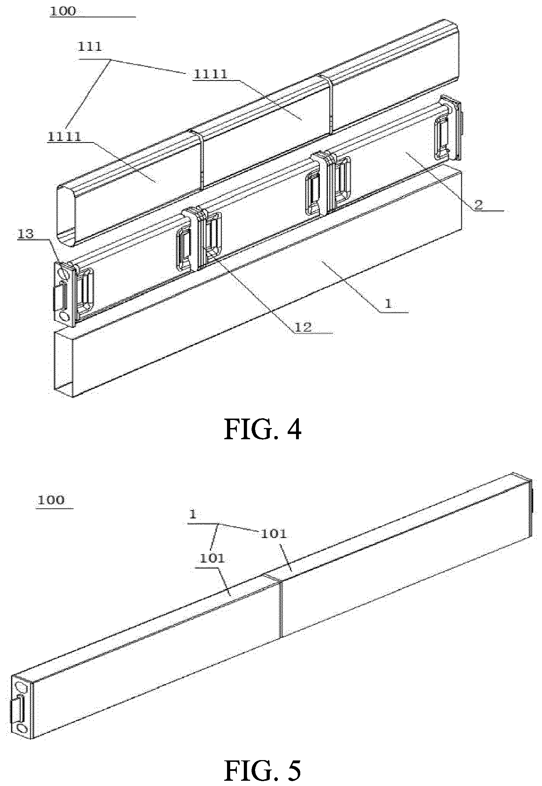

As shown in FIG. 4, in other embodiments, the housing 1 has an integral structure extending along the first direction. A battery core assembly 120 is arranged in the housing 1, which includes a separator 111 and the partition plates 12. The accommodating cavities 11 are located inside the separator 111. The separator 111 includes a number of sub-separators 1111 arranged along the first direction, the partition plate 12 is connected to two adjacent sub-separators 1111 at the same time, two adjacent accommodating cavities 11 share the same partition plate 12, and a cavity wall of the accommodating cavity 11 includes the sub-separator 1111 and the partition plate 12 or an end cover 13 located at an end of the sub-separator 1111. That is, the accommodating cavity 111 at an end of the battery 100 along the first direction is an end accommodating cavity, and the accommodating cavity 11 at a middle position of the battery 100 is a middle accommodating cavity. A cavity wall of the end accommodating cavity includes the end cover 13, the partition plate 12 and the sub-separator 1111 located between the end cover 13 and the partition plate 12. A cavity wall of the middle accommodating cavity includes two adjacent partition plates 12 and the separator 1111 located between the two adjacent partition plates 12.

For example, in other embodiments, the separator 111 includes a number of independent sub-separators 1111, and the sub-separator 1111 extends along the first direction and wraps the side peripheral walls of two adjacent partition plates 12, or the side peripheral walls of the end cover 13 and the side peripheral walls of the partition plate 12 adjacent to the end cover 13, to form the accommodating cavity 11.

The plurality of sub-separators 1111 are multiple independent parts separated from each other. That is, the separator 111 is stand-alone separator bodies, each of the sub-separators 1111 has a cylindrical structure with open ends, the electrode core assembly 2 is located inside the cylindrical sub-separator 1111, and the partition plate 12 or the end cover 13 seals the opening of a corresponding separator 111 to form an accommodating cavity.

In this application, there are no particular restrictions on the sealing method and specific structure of the separator 111 and the partition plate 12 or the end cover 13. For example, when the material of the partition plate 12 or the end cover 13 is plastic, and the separator 111 is made of plastic, the separator 111 and the partition plate 12 or the end cover 13 can be sealed by hot melting.

However, in some other embodiments of this application, the battery 100 also includes a separator bag, the electrode core assemblies 2 are located in the separator bag, and the partition plates 12 divide the interior of the separator bag into a number of accommodating cavities 11. The separator bag serves for insulation and to protect the lithium ions in the electrolyte against contact with the housing 1, so as to improve the service life of the battery 100.

That is, in some other embodiments, the separator 111 can be replaced by a bag-shaped separator bag, and the partition plates 12 are located in the separator bag to divide the interior of the separator bag into a number of accommodating cavities 11. Each accommodating cavity 11 is provided with at least one electrode core assembly 2 therein.

In this application, by setting the separator or separator bag, a layer of sealing package structure is added in the housing 1, to improve the overall leak tightness of the battery 100.

In some embodiments, the housing 1 is a metal housing, for example, aluminum housing or it may be formed of other metals as required. Since the battery 10 has a number of serially connected electrode core assemblies 2 provided therein, the voltage is different at the housing 1 outside the accommodating cavity 11 where a different electrode core assembly 2 is located. In some cases, this may lead to a too low potential of the aluminum housing at some positions, causing lithium ions to intercalate into the aluminum housing to form a lithium-aluminum alloy that affects the service life of the battery 10. The separator or separator bag also can effectively protect lithium ions from contact with the housing 1, reduce the possibility of Li-A1 reaction, and improve the safety and reliability of the battery 10 during use. Moreover, the separator or separator bag is also insulating.

In this application, the separator 111 or a bag wall of the separator bag can be a double-layer film.

The separator 111 and the separator bag are both insulating and resistant to electrolytic corrosion, and are particularly an ion separator. There is no particular restriction on the material of the ion separator, as long as it is insulating and non-reactive with the electrolyte. In some embodiments, the ion separator may be formed of polypropylene (PP) or polyethylene (PE), or may be a multi-layer composite film. For example, the separator includes an inner layer, an outer layer and a middle layer between the inner and outer layers. The inner layer includes a plastic material, for example, the inner layer can be formed of materials that are insulating and less reactive with the electrolyte. The middle layer includes a metal material, to prevent the penetration of water vapor outside the battery, and the leakage of the internal electrolyte. As a metal layer, aluminum foil, stainless steel foil, and copper foil are preferred. Considering the moldability, light weight and cost, aluminum foil is preferred. As the material of aluminum foil, it is preferred to use pure aluminum-based or aluminum-iron-based alloy materials. The outer layer is a protective layer, usually formed of a polyester or nylon material with high melting point, which has strong mechanical performances, and prevents the battery from being damaged by an external force, thus protecting the battery. For example, an aluminum-plastic composite film is used.

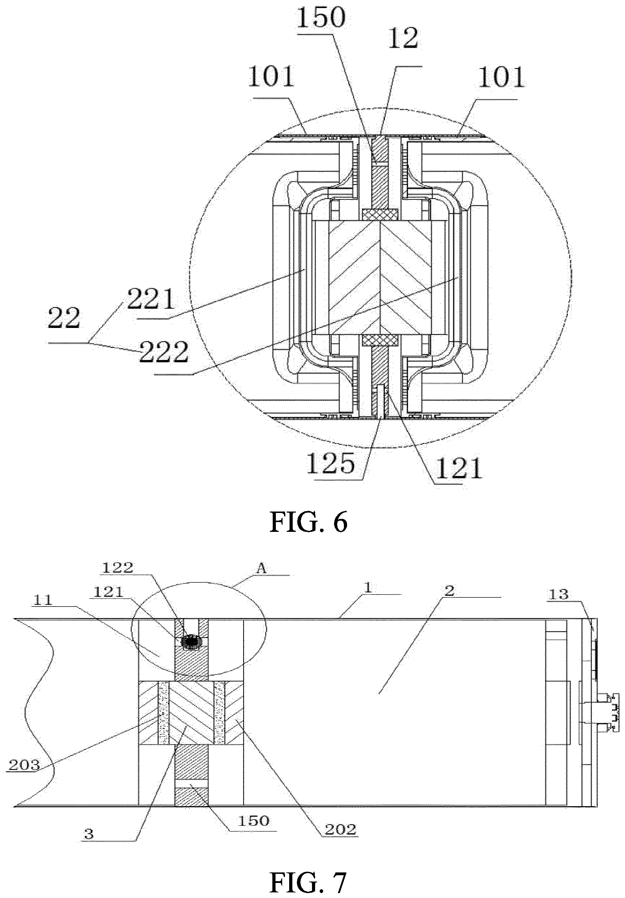

Referring to FIGs. 5 and 6, FIG. 5 is a schematic view of a battery 100 according to another embodiment. FIG. 6 is a schematic cross-sectional view at some positions in the battery 100 according to another embodiment. In another embodiment, the housing 1 includes a number of sub-housings 101 arranged along the first direction, the partition plate 12 is connected to two adjacent sub-housings 101 at the same time, two adjacent accommodating cavities 11 share the same partition plate 12, and a cavity wall of the accommodating cavity 11 includes the sub-housing 101 and the partition plate 12 or an end cover 13 located at an end of the sub-housing 101. That is, the accommodating cavity 11 at an end of the battery 100 along the first direction is an end accommodating cavity, and the accommodating cavity 11 at a middle position of the battery 100 is a middle accommodating cavity. A cavity wall of the end accommodating cavity includes the end cover 13, the partition plate 12 and the sub-housing 101 located between the end cover 13 and the partition plate 12. A cavity wall of the middle accommodating cavity includes two adjacent partition plates 12 and the sub-housing 101 located between the two adjacent partition plates 12.

For example, in another embodiment, the housing 1 is discrete along the first direction, two adjacent sub-housings 101 share one partition plate 12 and extend to cover partial area of a peripheral side wall of the partition plate 12, so that each sub-housing 101 fits with the corresponding partition plate(s) 12 and/or the end cover 13 to form the accommodating cavity 11. As shown in FIG. 5, two adjacent sub-housings 101 are spaced apart from each other, and a peripheral side wall of the partition plate 12 is exposed in the area between the two adjacent sub-housings 101.

In the embodiment shown in FIG. 5, at least one of two outermost sub-housings 101 has an opening opposite to the partition plate 12, and the end cover 13 is arranged at the opening of the outermost sub-housing 101 along the first direction, to close the opening, and fit with the sub-housing 101 and the opposite partition plate 12 to form the accommodating cavity 11.

In this embodiment, by arranging the housing 1 in the form of multiple discrete sub-housings 101, the effect of apparent cells is achieved, and it is easy to distinguish the position of each accommodating cavity 11, to facilitate the management and maintenance the battery.

The battery 100 is generally a cuboid, having a length, a width and a thickness, where the length is greater than the width, and the width is greater than the thickness. The gas guide hole 150 and the liquid guide hole 121 are arranged on the partition plate 12 at intervals along the width direction.

As shown in FIG. 1, 2 partition plates 12 are arranged in the housing 1, and the 2 partition plates 12 divide the interior of the housing 1 into 3 accommodating cavities 11. Moreover, each accommodating cavity 11 is provided with one electrode core assembly 2 therein, and the electrode core assemblies 2 are sequentially connected in series. In other embodiments of this application, 1 or more than 2 partition plates 12 may be provided. Each accommodating cavity 11 is provided with only one electrode core assembly 2 as shown in FIG. 2, or multiple, for example, 2 or 3 electrode core assemblies 2 can be arranged side by side in one accommodating cavity 11. When the battery 100 is installed on an object to be powered, for example, vehicle 1000, the gas guide hole 150 is located on the partition plate 12 at a position farther from the ground than the liquid guide hole 121.

After the electrolyte injection is completed or the battery 100 is installed on an object to be powered and runs normally, the gas guide hole 150 can also be used to enable the connection between adjacent accommodating cavities 11. When the battery 100 is overcharged or short-circuited, gas can be vented via the gas guide hole 150 quickly, to avoid the risk of battery swelling.

When the blocking mechanism 122 is in a first state, the liquid guide hole 121 is in the open state; and when the blocking mechanism 122 is in a second state, the liquid guide hole 121 is in the closed state, where the blocking mechanism 122 is switchable between the first state and the second state.

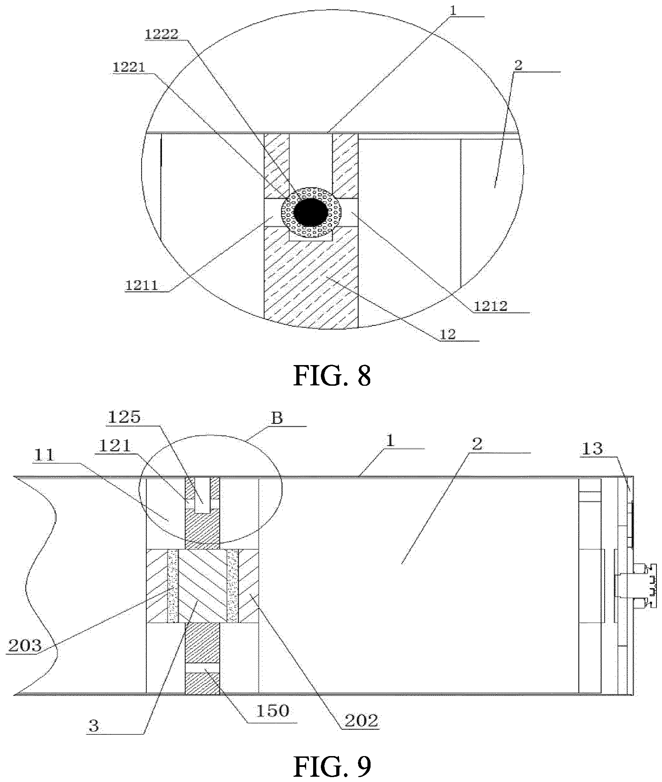

When the blocking mechanism 122 is in the second state, the liquid guide hole 121 is closed. FIGs. 7 and 8 shows the state of the battery 100 after electrolyte injection. At this time, the blocking mechanism 122 is in the second state, as does in a normal state of use of the battery 100. In this state, the blocking mechanism 122 closes the liquid guide hole 121.

In some embodiments of this application, the blocking mechanism 122 may completely close the liquid guide hole 121, or partially close the liquid guide hole 121, as long as the electrolyte in adjacent accommodating cavities 11 can be isolated. Under normal operating conditions of the battery 100, although the accommodating cavity 11 is not completely closed and isolated, it is unlikely to cause the intercommunication of electrolyte during use since the liquid guide hole 121 is at a certain height.

That is, in some embodiments, after the electrolyte injection is completed, the blocking mechanism 122 is at least partially located at the liquid guide hole 121, and the blocking mechanism 122 closes the liquid guide hole 121, to block the communication between two adjacent accommodating cavities 11 via the liquid guide hole 121. Therefore, for the battery 100, after the electrolyte injection is completed, the liquid guide hole 121 does not need to be open. At this time, the blocking mechanism 122 can close the liquid guide hole 121 constantly, to persistently block the communication between two adjacent accommodating cavities 11 via the liquid guide hole 121.

In an embodiment of this application, before electrolyte injection into the battery, the liquid guide hole and the gas guide hole both bring two adjacent accommodating cavities at both sides of the partition plate 12 into communication. Therefore, when one of the accommodating cavities is vacuumed, the air in the other adjacent accommodating cavity can flow into the accommodating cavity through the liquid guide hole. Thus, there is no need to perform a vacuuming operation on each accommodating cavity separately, thereby improving the work efficiency, and saving costs.

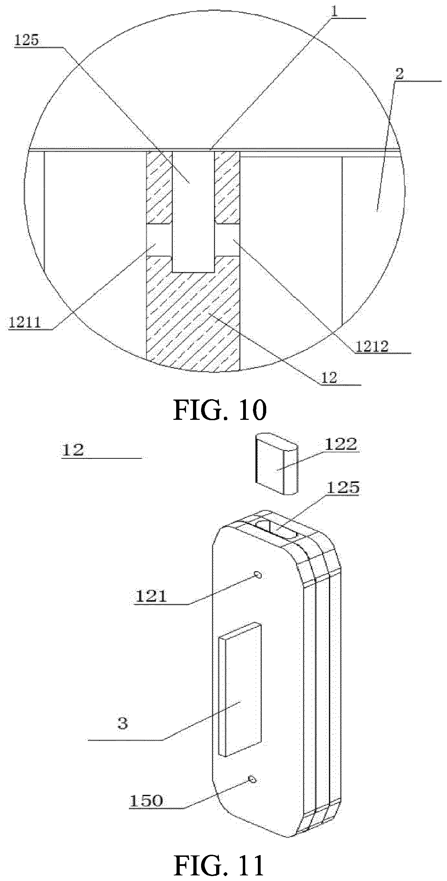

Referring to FIGs. 7 to 10, in an embodiment of this application, during electrolyte injection into the battery 100, the liquid guide hole 121 brings two adjacent accommodating cavities 11 into communication, as shown in FIGs. 9 and 10. After electrolyte injection into the battery 100, or during normal use, the blocking mechanism 122 is in the second state, and the blocking mechanism 122 closes the liquid guide hole 121, to block the communication between two adjacent accommodating cavities 11 via the liquid guide hole 121, as shown in FIGs. 7 and 8. As such, the two adjacent accommodating cavities 11 are isolated completely.

That is, before or during electrolyte injection into the battery 100, the blocking mechanism 122 is in the first state, the liquid guide hole 121 is in the open state, and the liquid guide hole 121 brings two adjacent accommodating cavities 11 at both sides of the partition plate 12 into communication. After electrolyte injection into the battery 100, the blocking mechanism 122 is switched from the first state to the second state, and the blocking mechanism 122 closes the liquid guide hole 121, such that the liquid guide hole 121 is in the closed state.

In some embodiments, during formation of the battery 100 after electrolyte injection, the blocking mechanism 122 is in the first state, the liquid guide hole 121 is in the open state, and the liquid guide hole 121 brings two adjacent accommodating cavities 11 at both sides of the partition plate 12 into communication. After electrolyte injection and formation of the battery 100, the blocking mechanism 122 is switched from the first state to the second state, and the blocking mechanism 122 closes the liquid guide hole 121, such that the liquid guide hole 121 is in the closed state.

When the liquid guide hole 121 is in the closed state, the blocking mechanism 122 is at least partially located at the liquid guide hole 121, and the blocking mechanism 122 closes the liquid guide hole 121, to block the communication between two adjacent accommodating cavities 11 via the liquid guide hole 121.

For example, as shown in FIG. 1, The blocking mechanism 122 may have a cylindrical structure partially extending into the liquid guide hole 121, to close the liquid guide hole 121.

As shown in FIG. 11, the blocking mechanism 122 may have a sheet-like structure partially extending into the liquid guide hole 121, to close the liquid guide hole 121.

The first state is such that the blocking mechanism 122 is located at a first position in the battery 100; and the second state is such that the blocking mechanism 122 is located at a second position in the battery 100.

As shown in FIGs. 9 and 10, in an embodiment of this application, the partition plate 12 has a blocking mechanism holding space 125 provided thereon, where the blocking mechanism holding space 125 is formed with the first position and second position for holding the blocking mechanism 122, and the blocking mechanism 122 is movable from the first position to the second position under a force. Before or during electrolyte injection into the battery 100, or before electrolyte injection and formation, the blocking mechanism 122 is at the first position, that is, the blocking mechanism 122 is in the first state, and the liquid guide hole 121 brings two adjacent accommodating cavities 11 into communication. After electrolyte injection, during normal use, or after formation of the battery 100 after electrolyte injection, the blocking mechanism 122 is at the second position, that is, the blocking mechanism 122 is in the second state, and the blocking mechanism 122 closes the liquid guide hole 121, to block the communication between two adjacent accommodating cavities 11 via the liquid guide hole 121.

As shown in FIGs. 9 and 10, the blocking mechanism holding space 125 communicates with the liquid guide hole 121.

In the above embodiments, the blocking mechanism holding space 125 is a space arranged inside the partition plate 12, that is, the blocking mechanism holding space 125 has no opening in the outer periphery of the partition plate 12; and the blocking mechanism 122 is held in the blocking mechanism holding space 125. Before electrolyte injection, the blocking mechanism 122 is located at the first position in the blocking mechanism holding space 125. At this time, the blocking mechanism 122 does not close the liquid guide hole 121. After electrolyte injection, an external force is applied to the blocking mechanism 122, to move it from the first position to the second position in the blocking mechanism holding space 125, to close the liquid guide hole 121, and block the communication between two adjacent accommodating cavities 11 via the liquid guide hole 121.

In this application, the external force is one or more selected from gravity, electromagnetic force, inertial force or thermal force. In some embodiments of this application, the blocking mechanism can be switched from the first position to the second position under the gravity, electromagnetic force, or inertial force, alone or in combination. In some other embodiments, the blocking mechanism can close the electrolyte injection hole by hot melting under thermal force.

In an embodiment of this application, as shown in FIG. 10, the blocking mechanism holding space 125 is arranged to intersect with the liquid guide hole 121, and the liquid guide hole 121 is divided by the blocking mechanism holding space 125 into a first liquid guide hole 1211 and a second liquid guide hole 1212. Both the first liquid guide hole 1211 and the second liquid guide hole 1212 communicate with a closing space in the blocking mechanism holding space 125, that is, communicate with the blocking mechanism holding space 125, to bring two adjacent accommodating cavities 11 into communication.

In another embodiment, the first liquid guide hole 1211 and the second liquid guide hole 1212 are cylindrical holes, and the first liquid guide hole 1211 and the second liquid guide hole 1212 are arranged coaxially. During the assembly process, particularly during the process of electrolyte injection, the uniformity in height of the electrolyte level can be well determined; and the uniformity in height of the electrolyte level in each accommodating cavity 11 can be determined at least when the electrolyte level rises to the central axis of the first liquid guide hole 1211 and the second liquid guide hole 1212.

Still further, the first liquid guide hole 1211 and the second liquid guide hole 1212 have the same inner diameter; and the first liquid guide hole 1211 and the second liquid guide hole 1212 are arranged coaxially at the same time to well control the amount of electrolyte injected and the height of the electrolyte.

In the above-mentioned embodiments of this application, the blocking mechanism 122 is a sphere, having an outer diameter larger than the outer diameter of the first liquid guide hole 1211 and/or the second liquid guide hole 1212, so that the spherical blocking mechanism 122 can well close the first liquid guide hole 1211 and/or the second liquid guide hole 1212, to block the communication between two adjacent accommodating cavities 11.

In the embodiment, as shown in FIG. 8, when the spherical blocking mechanism 122 closes the first liquid guide hole 1211 and/or the second liquid guide hole 1212, an upper part of the spherical blocking mechanism 122 is at least partially located in a first space, and a lower part of the blocking mechanism 122 is at least partially located in a second space. The first space can be a space where the blocking mechanism 122 can block the space of the liquid guide hole 121 when located therein, that is, the closing space. The second space can be a space communicating with the first space and provided for moving the blocking mechanism 122. The part of the spherical blocking mechanism 122 located in the closing space closes the first liquid guide hole 1211 and/or the second liquid guide hole 1212, and the top and bottom are located outside the closing space. The blocking mechanism 122 can be well arranged in the closing space by interference fit, and completely close the first liquid guide hole 1211 and/or the second liquid guide hole 1212.

In this application, to realize the isolation of the first liquid guide hole 1211 and/or the second liquid guide hole 1212 by the blocking mechanism 122, the blocking mechanism 122 is attached to the inner wall of the blocking mechanism holding space 125 by interference fit, such that the blocking mechanism 122 is enabled to seal at least one inner opening of the first liquid guide hole 1211 and/or the second liquid guide hole 1212 corresponding to the closing space.

In this embodiment, the blocking mechanism 122 is arranged inside the partition plate 12 and in the housing 1. During the assembly process of the battery 100, generally, the partition plate 12 having the blocking mechanism 122 is connected to the electrode core assembly 2, and then positioned in the housing 1. After assembly, an electrolyte is injected into the interior of the housing 1, followed by a sealing step after the electrolyte injection. Therefore, it is a key problem in the solution of built-in blocking mechanism 122 to switch the blocking mechanism 122 built in the partition plate 12 from a non-sealing position to a sealing position, while ensuring the reliability of sealing.

In an embodiment of this application, a magnetic seal with magnetism can be used as the blocking mechanism 122 in this application. During a fabrication process of the battery 100, the blocking mechanism 122 is arranged inside the partition plate 12 and a blocking mechanism holding space 125 is provided in the partition plate 12. Because the blocking mechanism 122 is magnetic, after electrolyte injection, an external magnetic field is applied to the blocking mechanism 122, to generate a drawing force to move it from the first position to the second position. In the solution, by means of the external magnetic field, the magnetic force acts as an external force to the blocking mechanism 122, so that the movement of the blocking mechanism 122 can be realized while no other structural design of the partition plate 12 is needed. Moreover, by controlling the magnetic field strength, the magnitude of the external force applied to the blocking mechanism 122 is adjusted. Therefore, the magnitude of the force can be adjusted according to different application scenarios, to ensure the sealing effect of the blocking mechanism 122.

In general, a magnetic body with magnetism has high hardness and toughness; and the partition plate 12 also has high hardness and toughness for the purpose of connection and support. In this application, the blocking mechanism 122 needs to be encapsulated inside the partition plate 12 by interference fit. In the case of high hardness of the blocking mechanism 122 and the partition plate 12, effective interference fit cannot be formed therebetween, and the sealing effect is poor. Therefore, in an embodiment of this application, an outer periphery of the magnetic seal is covered with an insulating layer, such as a rubber layer. In this way, high deformation is achieved, to effectively realize the interference fit between the seal and the partition plate 12, and ensure the sealing effect and reliability.

The blocking mechanism 122 is attached to the inner wall of the blocking mechanism holding space 125 by interference fit.

As shown in FIGs. 7, and 8, when the blocking mechanism 122 is a magnetic body with magnetism. the blocking mechanism 122 is externally sheathed with an elastic sleeve. That is, the blocking mechanism 122 may be one in which the magnetic body is a magnetic material ball 1222 with an elastic sleeve 1221. The magnetic material ball 1222 can be a magnet ball or a metal ball made of a material such as iron, and the elastic sleeve 1221 can be a rubber sleeve. In the solution, the magnetic material ball 1222 ensures the sealing strength, and the elastic sleeve 1221 improves the sealing tightness.

In an embodiment of this application, as shown in FIGs. 7, 8, and 11, the blocking mechanism 122 may be of a cylindrical shape, an elliptic cylindrical shape, a sheet-like shape or a spherical shape.

In some embodiments, as shown in FIGs. 7 to 11, the blocking mechanism 122 can be a seal plug, and the blocking mechanism holding space 125 is a sealing hole.

As shown in FIGs. 7 and 8, the seal plug is spherical, which is attached to a hole wall of the liquid guide hole 121 and a communicating port between the liquid guide hole 121 and the sealing hole by interference fit.

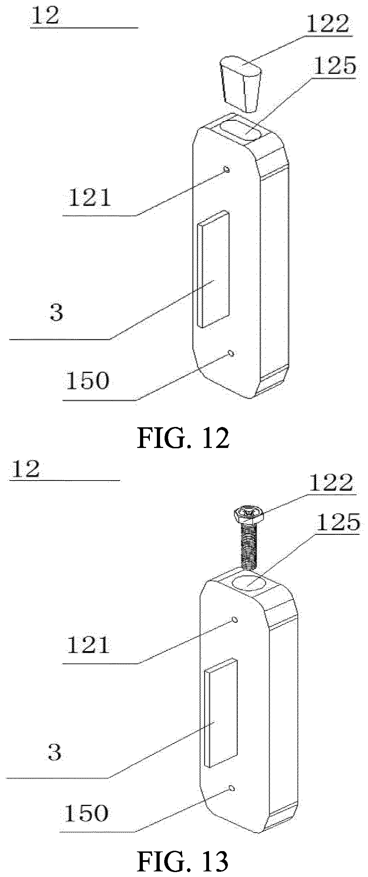

Referring to FIG. 12, in some embodiments, the seal plug is a wedge-shaped structure, having a size gradually increasing from a first end to a second end. The first end of the seal plug is located in the liquid guide hole 121 after traveling through the sealing hole so that the liquid guide hole 121 is in a closed state, and the second end of the seal plug is at the side away from the liquid guide hole 121.

Referring to FIG. 13, in another embodiment, the seal plug is a screw structure including a nut and a stud, where the stud has an external thread, and the sealing hole has an internal thread. The stud fits to the sealing hole by threaded connection, and after the stud is screwed into the liquid guide hole, the liquid guide hole is closed.

In an embodiment, the seal plug can be a cylindrical structure having an external thread on a cylindrical surface of the seal plug, the sealing hole has an internal thread, and the seal plug fits to the sealing hole by threaded connection.

In some embodiments, the seal plug and the sealing hole are fixed by snap fit, and the seal plug is circumferentially provided with an elastic seal ring. When the seal plug travels through the sealing hole, the elastic seal ring fits to the seal plug by interference fit, to achieve the effect of sealing.

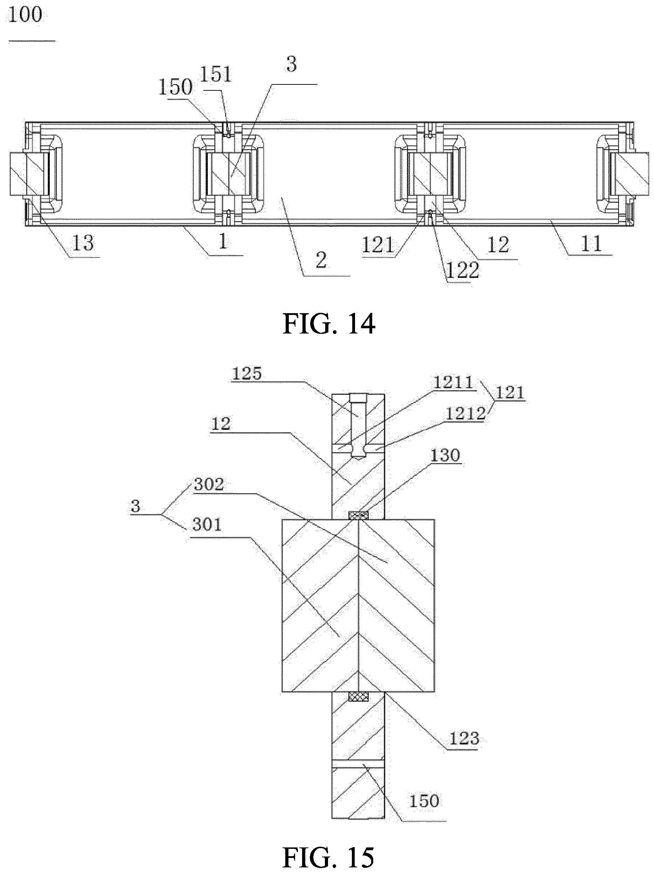

FIG. 14 is a schematic cross-sectional view of a battery 100 according to another embodiment. In another embodiment, the battery also includes a gas guide hole blocking mechanism 151, which enables the gas guide hole 150 to be in a settable state, including an open state and a closed state. Under normal operating conditions of the battery, although the accommodating cavity is not completely closed and isolated, it is unlikely to cause the intercommunication of electrolyte during use since the gas guide hole is at a certain height. However, for the sake of insurance, and achieving an optimum effect, the gas guide hole blocking mechanism enables the gas guide hole to be in the closed state during use, to block the communication between accommodating cavities.

Before and during electrolyte injection into the battery 100, or before and during formation after electrolyte injection, the gas guide hole blocking mechanism 151 enables the gas guide hole 150 to be in the open state, the gas guide hole 150 brings two adjacent accommodating cavities 11 at both sides of the partition plate 12 into communication.

Specifically, before and during electrolyte injection into the battery 100, or before and during formation after electrolyte injection, the gas guide hole blocking mechanism 151 is at a first position, such that the gas guide hole 150 is in the open state, and the gas guide hole 121 brings two adjacent accommodating cavities 11 into communication.

After electrolyte injection, during normal use, or after formation of the battery 100 after electrolyte injection, the gas guide hole blocking mechanism 151 closes the gas guide hole 150, such that the gas guide hole 150 is in the closed state. When the battery 100 is overcharged or short-circuited, the gas guide hole blocking mechanism 151 enables the gas guide hole 150 to be in the open state, so that the gas guide hole 151 brings two adjacent accommodating cavities 11 at both sides of the partition plate 12 into communication.

After electrolyte injection, during normal use, or after formation of the battery 100 after electrolyte injection, the gas guide hole blocking mechanism 151 is at a second position, such that the gas guide hole 150 is in the closed state.

Therefore, during the process of electrolyte injection, the gas guide hole 150 is in the open state, to facilitate the air circulation during the process of electrolyte injection, and speed up the electrolyte injection. After electrolyte injection, during normal use, or after formation of the battery after electrolyte injection, the gas guide hole 150 can be in the closed state, and the electrolyte injection hole 121 is also in the closed state as described above. Therefore, adjacent accommodating cavities 11 are isolated completely, to avoid problems such as short circuit caused by the flow of electrolyte between two accommodating cavities 11.

The battery 100 may be overcharged or short-circuited. In this state, the gas inside the battery 100 needs to be vented as quick as possible. When the battery 100 is overcharged or short-circuited, the gas guide hole blocking mechanism 151 enables the gas guide hole 150 to be in the open state, so that the gas guide hole 150 brings two adjacent accommodating cavities 11 at both sides of the partition plate 12 into communication, to allow the gas to be vented out of the housing 11 quickly. When the electrode core assembly 2 in a certain accommodating cavity 11 is overcharged or short-circuited, the accommodating cavity 11 is brought into communication with an adjacent accommodating cavity 11 by opening the gas guide hole 150, such that the gas expanding in the accommodating cavity due to the temperature rise caused by overcharge or short circuit can be exhausted to other accommodating cavities 11, thereby reducing the gas pressure in the accommodating cavity 11. Therefore, when the battery 100 is overcharged or short-circuited, the gas guide hole blocking mechanism 151 enables the gas guide hole 150 to be in the open state, and the gas guide hole 150 brings two adjacent accommodating cavities 11 into communication.

The partition plate 12 may also have a gas guide hole blocking mechanism holding space provided thereon, where the gas guide hole blocking mechanism holding space is formed with a first position and a second position for holding the gas guide hole blocking mechanism 151, and the gas guide hole blocking mechanism 151 is movable from the first position to the second position under a force. Before or during electrolyte injection, or before formation of the battery 100 after electrolyte injection, the gas guide hole blocking mechanism 151 is located at the first position, and the gas guide hole 150 brings two adjacent accommodating cavities 11 into communication. After electrolyte injection, during normal use, or after formation of the battery 100 after electrolyte injection, the gas guide hole blocking mechanism 151 is at the second position, and the gas guide hole blocking mechanism 151 closes the gas guide hole 150, to block the communication between two adjacent accommodating cavities 11 via the gas guide hole 150. When the battery 100 is overcharged or short-circuited during use, the gas guide hole blocking mechanism 151 can be switched to the first position, such that the liquid guide hole 150 is in the open state, and the gas guide hole 150 brings two adjacent accommodating cavities 11 at both sides of the partition plate 12 into communication.

The gas guide hole blocking mechanism holding space communicates with the gas guide hole 150.

In the above embodiments, the gas guide hole blocking mechanism holding space is a space arranged inside the partition plate 12, that is, the gas guide hole blocking mechanism holding space has no opening in the outer periphery of the partition plate 12; and the gas guide hole blocking mechanism 151 is held in the gas guide hole blocking mechanism holding space.

The structures of and the relationship between the gas guide hole 150, the gas guide hole blocking mechanism 151, and the gas guide hole blocking mechanism holding space are substantially the same as those described for the liquid guide hole 121, the blocking mechanism 122 and the blocking mechanism holding space 125. Various variable embodiments of the liquid guide hole 121, the blocking mechanism 122 and the blocking mechanism holding space 125 are applicable to the gas guide hole 150, the gas guide hole blocking mechanism 151, and the gas guide hole blocking mechanism holding space. For example, the gas guide hole blocking mechanism 151 may be of a cylindrical shape, an elliptic cylindrical shape, a sheet-like shape or a spherical shape. For example, the gas guide hole blocking mechanism 151 has a spherical shape, and attached to a hole wall of the gas guide hole 151 by interference fit etc., which are not repeated here.

In some embodiments, the gas guide hole 150, the gas guide hole blocking mechanism 151, and the gas guide hole blocking mechanism holding space can even be symmetrical structures to the liquid guide hole 121, the blocking mechanism 122 and the blocking mechanism holding space 125 arranged on the partition plate 12.

In this application, the electrode core assembly 2 may be composed of a single electrode core 201 or include at least two electrode cores 201, where the at least two electrode cores 201 are connected in parallel, to form the electrode core assembly 2. As shown in FIG. 2, two electrode cores 201 are connected in parallel, to form the electrode core assembly 2; or four electrode cores 201 are connected in parallel, to form the electrode core assembly 2.

At least one partition plate 12 are arranged inside the housing 1, for example, one, two, three or more, and generally preferably 2 or more.

In this application, to eliminate the problem that when the battery 100 is too long, the electrolyte therein is caused to decompose due to the large pressure difference, affecting the performance of the battery 100, the partition plate 12 is particularly arranged between adjacent accommodating cavities 11. Preferably, for the sake of good insulation and isolation, the partition plate 12 itself can be formed of an insulating material, that is, the partition plate 12 is an insulating partition plate 12. Therefore, two accommodating cavities 11 can be isolated and kept insulated directly by the partition plate 12 without other operations.

The partition plate 12 divides the interior of the housing 11 into at least two accommodating cavities 11, and the electrode core assembly 2 is accommodated in the accommodating cavity 11. Generally, as shown in FIG. 2, one accommodating cavity 11 accommodates one electrode core assembly 2. At least two electrode cores 2 are connected in series. Generally, the number of serially connected electrode core assemblies 2 depends on the output voltage of each electrode core assembly 2, the width of the battery pack and the overall voltage requirement of the battery pack. For example, a type of vehicle requires an output voltage of a battery 10 system of 300 V, and the voltage of a traditional iron-lithium battery 10 is 3.2 V, so in related art, 100 batteries 100 need to be connected in series in the pack to meet the requirement. In the battery pack provided in this application, assuming that 2 electrode core assemblies 2 are serially connected in one battery 100, then only 50 batteries 100 need to be arranged. This greatly reduces the design of the entire pack and the arrangement of the batteries 100, thus making efficient use of the space, and improving the space utilization.

Certainly, multiple electrode core assemblies 2 can be accommodated in one accommodating cavity 11, and the multiple electrode core assemblies 2 in each cavity 11 are connected in parallel. For example, 2 or 3 electrode core assemblies 2 are present in one accommodating cavity 11, and the 2 electrode core assemblies 2 are connected in parallel, or the 3 electrode core assemblies 2 are connected in parallel. It can be understood that the number of electrode core assemblies contained in each accommodating cavity can be the same or different according to actual needs.

In this application, the electrode core assemblies 2 located in different accommodating cavities 11 are connected in series.

It should be noted that the serial connection of the electrode core assemblies in two adjacent accommodating cavities can be either directly serial connection or indirectly serial connection, for example, serial connection via an interposing member.

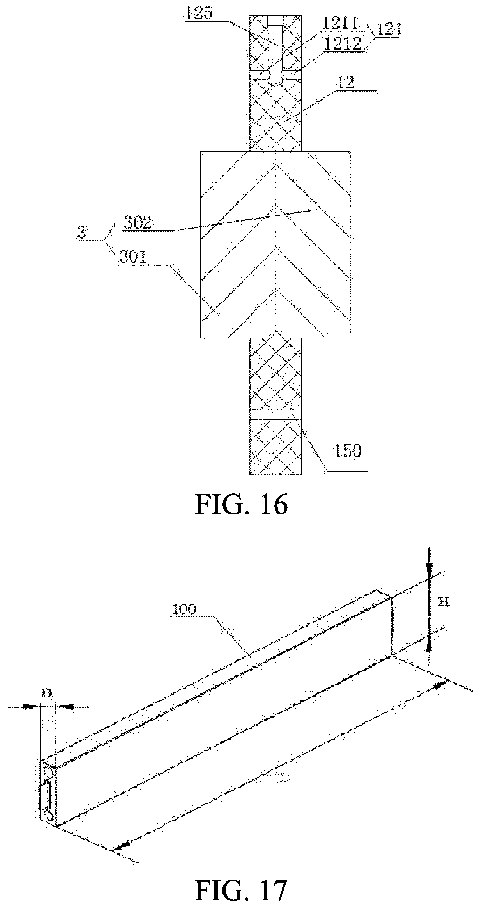

Referring to FIGs. 15 and 16, in an embodiment of this application, the battery pack 100 also includes an electrode core connector 3, and two adjacent electrode core assemblies 2 are connected in series through the electrode core connector 3. In this application, because two adjacent electrode core assemblies 2 are co-located inside one housing 11, the distance between the two electrode core assemblies 2 is greatly reduced. Compared with the connection of the two batteries 100 through a power connector, the subsequent assembly process of the battery pack is simplified. Moreover, the use of materials is reduced, and the weight is decreased. Moreover, two electrode core assemblies 2 are installed in the same housing 11, greatly reducing the requirements for stability and firmness of the electrode core connector 3. Without considering the connection reliability, the electrode core connector 3 is given more design space, the flow area is increased, and the internal resistance of the battery 100 is reduced.

For the electrode core connector 3, a connection and positional relationship between the electrode core connector 3 and the partition plate 12 is disclosed in an embodiment of this application. As shown in FIG. 14, a communicating hole 123 is further provided on the partition plate 12, and the electrode core connector 3 is inserted in the communicating hole 123. That is, the electrode core connector 3 extends through the communication hole 123, one end of the electrode core connector 3 is connected to the electrode core assembly 2 at one side of the partition plate 12, and the other end of the electrode core connector 3 is connected to the electrode core assembly 2 at the other side of the partition plate 12. In order to isolate the accommodating cavities 11 at both sides of the partition plate 12, an encapsulating structure 130 is provided in the communicating hole 123, where the encapsulating structure 130 encapsulates the electrode core connector 3 in the communicating hole 123, and closes the communicating hole 123, to isolate adjacent accommodating cavities 11 at both sides of the partition plate 12.

A specific solution of installing the electrode core connector 3 provided in an embodiment of this application is described above. However, in the solution, the communicating hole 123 requires secondary encapsulation, bringing inconvenience to the operations. Moreover, during the secondary encapsulation, the material used in the encapsulating structure 130 is complex, possibly causing influence to the electrolyte inside the battery 100. In view of this, in another embodiment of this application, as shown in FIG. 15, a solution of integrally molding the electrode core connector 3 and the partition plate 12 is provided. In the solution, the electrode core connector 3 is integrally molded with the partition plate 12. Specifically, the electrode core connector 3 is fabricated, and then, the partition plate 12 is injection-molded outside the electrode core connector 3. During the assembly process, the electrode core assembly 2 is directly connected with the electrode core connector 3, and no communicating hole 123 needs to be encapsulated, thus simplifying the process and reducing the risk.

In some embodiments, the electrode core connector 500 includes two connection portions made of different materials.

As shown in FIGs. 15 and 16, the electrode core connector 3 includes a copper connection portion 301 and an aluminum connection portion 302, where the copper connection portion 301 and the aluminum connection portion 302 are electrically connected, at a position inside the partition plate 12. In the embodiment, the copper connection portion 301 is connected to an electrode lead-out part 22 of the electrode core assembly 2 at one side of the partition plate 12, and the aluminum connection portion 302 is connected to an electrode lead-out part 22 of the electrode core assembly 2 at the other side of the partition plate 12.

More specifically, the copper connection portion 301 and the aluminum connection portion 302 are combined and connected, to form a combined connection. Then, the partition plate 12 is formed by injection molding outside the combined connection. Therefore, the copper connection portion 301 and the aluminum connection portion 302 are brought into contact at a position (the combined connection) sealed inside the partition plate 12, which is thus prevented from being exposed to the internal space of the battery 100, and prevented from coming into contact with the electrolyte, thereby avoiding corrosion at the copper-aluminum connection.

In some embodiments, the material of the electrode lead-out part 22 at both ends of the electrode core assembly 2 can be different, but is respectively the same as the material of the connection portion of the electrode core connector 3 inside the front partition plate 12. For example, the material of the electrode lead-out part 22 of the electrode core assembly 2 connected to the copper connection portion 301 of the electrode core connector 3 is also copper, and the material of the electrode lead-out part 22 at the other end of the electrode core assembly 2 connected to the aluminum connection portion 302 of the electrode core connector 3 is also aluminum.

In an embodiment of this application, the electrode lead-out parts 22 at both ends of the electrode core assembly 2 are arranged at two opposite sides of the electrode core assembly 2 along the first direction, all the electrode core assemblies 2 in the housing are arranged in the first direction, and the first direction is the length direction of the battery 100. That is, the electrode core assemblies 2 are arranged head-to-head. Such an arrangement is convenient for the serial connection between the electrode core assemblies 2, whereby the connection, processing, and assembly process are relatively simple.

In an embodiment of this application, as shown in FIG. 1, the opening of the housing 1 is located at the end of the housing 1 along the first direction (the X direction in FIG. 1), the end cover 13 is used to cover the opening of housing 1, and the upper and lower sides of the housing 1 are the side walls of the housing 1 itself. In a common design, an electrolyte injection hole is provided on the end cover 13. In this application, the liquid guide hole 121 is provided on the partition plate 12. Therefore, the electrolyte can be injected into each accommodating cavity 11 simply by injection via the end cover 13 at the end of the battery 100. In the solution, the electrolyte can be injected into each accommodating cavity 11 at a time, with no need for multiple openings and multiple electrolyte injections. As shown in FIG. 1, in an embodiment of this application, the first direction (left-right direction) is the length direction of the battery 100, and also the arrangement direction (serial connection direction) of the electrode core assemblies 2 inside the battery 100.

However, in another embodiment, when the number of the electrolyte injection holes is 2, the liquid guide hole 121 may not be provided on one of the plurality of partition plates 12. For example, the end cover 13 is provided at both ends of the housing 1 along the first direction, and an electrolyte injection channel, that is, the electrolyte injection hole, is provided on each end cover 13. The liquid guide hole 121 is not provided on one of the plurality of partition plates 12, and this partition plate 12 is designated as a first partition plate. The rest of the partition plates are provided with the liquid guide hole, and designated as second partition plates. The electrolyte injection channel in the end cover 13 at a first side of the first partition plate is used to inject electrolyte into the accommodating cavities 11 at the first side, and the electrolyte injection channel in the end cover 13 at a second side of the first partition plate is used to inject electrolyte into the accommodating cavities 11 at the second side. The liquid guide hole 121 of the second partition plate is used to bring the accommodating cavities 11 located at two sides of the second partition plate into communication. Therefore, the electrolyte injected via the electrolyte injection channel in the end cover 13 at the first side of the first partition plate will flow into all the accommodating cavities 11 at the first side of the first partition plate through the liquid guide holes 121 provided on the second partition plates at the first side, and the electrolyte injected via the electrolyte injection channel in the end cover 13 at the second side of the first partition plate will flow into all the accommodating cavities 11 at the second side of the first partition plate through the liquid guide holes 121 provided on the second partition plates at the second side. Certainly, the position of the electrolyte injection channel can also be arranged on the housing 1 according to actual needs. For example, it can also be arranged on the housing wall of housing 1 corresponding to an accommodating cavity 11.

In the field of power batteries, consistent operating conditions of each battery 100 are crucial, which directly affect the performance of the overall battery pack. Similarly, in this application, consistent operating conditions of each electrode core assembly 2 inside the battery 100 will also affect the overall performance of each battery 100, which in turn affects the performance of the overall battery pack. Inside the battery 100, the amount of the electrolyte will affect the performance of the battery 100, such as capacity, and activity, etc. Therefore, in this application, at least two partition plates 12 divide the interior of the housing 1 into at least three accommodating cavities 11, the liquid guide hole 121 on each partition plate 11 is a cylindrical hole penetrating the partition plate 12 in the first direction, and the liquid guide hole 121 of each partition plate 12 is coaxially arranged. Therefore, the liquid level of the electrolyte in each accommodating cavity 11 can be well controlled, by taking the central axis of the liquid guide hole 121 as a reference line. That is to say, the consistency of the amount of electrolyte in each accommodating cavity 11 can be well controlled, to ensure the consistency of each electrode core assembly 2.

Moreover, more preferably, each liquid guide hole 121 can be made to have the same inner diameter and arranged coaxially. Therefore, the consistency of the amount of electrolyte can be controlled more easily and precisely. Moreover, whether the electrolyte level is the same can be determined even when the electrolyte level is below the central axis. Accordingly, the consistency is improved and the difficulty of consistency determination is reduced on the whole, thus improving the operability and guaranteeing the performance of the battery 100.

In some embodiments, the battery 100 may not include the gas guide hole blocking mechanism 151 and the gas guide hole blocking mechanism holding space. Under normal operating conditions of the battery 100, although the gas guide hole 150 between accommodating cavities 11 is open, it is unlikely to cause the intercommunication of electrolyte during use since the gas guide hole 150 is at a certain height.

In some embodiments, a hole wall of the gas guide hole 150 at a preset position is recessed toward a preset direction to form a liquid storage groove. The preset direction is a direction towards the ground during normal operation of the battery 100 after being mounted on an object to be powered, for example, the vehicle 1000. The hole wall at the preset position is the hole wall of the gas guide hole 150 close to the ground. Therefore, in an extreme case, for example, when the angle of inclination of the battery 100 is too large and a small amount of electrolyte flows into the gas guide hole 150, the small amount of electrolyte can only be exclusively stored in the storage groove, thus avoiding the flow of electrolyte between adjacent electrode core assemblies 2 through the gas guide hole 150, avoiding the occurrence of short circuit, and improving the battery safety.

During normal operation of the battery 100 after being installed on an object to be powered, the liquid level of the electrolyte contained in the accommodating cavity 11 is significantly lower than the gas guide hole 150.

In some embodiments, the housing 1 is provided with a sampling line for sampling the electrical parameters of the electrode core assembly 2. a number of sampling lines may be provided, which are used for sampling the electrical parameters of the electrode core assemblies 2 in the plurality of accommodating cavities 11 respectively.

The electrical parameters may include at least one of voltage, current, and temperature. Abnormal states such as short circuit and overcharge of the battery 100 can be determined from the electrical parameters sampled by the sampling line.

In an embodiment, each sampling line is connected to the electrode lead-out part 22 of a corresponding electrode core assembly 2, extends from the inner side wall of the housing 1 to the end of the housing 1 after running through the partition plate 12, and then electrically connected to an external management unit after traveling through the end cover 13 provided at the end of the housing 1.

In another embodiment, each sampling line is connected to the electrode lead-out part 22 of a corresponding electrode core assembly 2, extends through an adjacent partition plate 12 and out of the housing 1 from a position on the housing 1 corresponding to the partition plate 12, and is then electrically connected to an external management unit.

Further, the plurality of sampling lines can all be extended to one electrical connection interface, and respectively electrically connected to a number of pins in the electrical connection interface for pluggable connection with the external management unit through the electrical connection interface.

In an embodiment of this application, the battery 100 has a length extending along the first direction, and the first direction is the length direction of the battery 100.

As shown in FIG 17, the battery 100 is generally a cuboid, having a length L, a width H and a thickness D, where the length L is greater than the width H, and the width H is greater than the thickness D. The length of the battery 100 is 400-2500 mm, and the length to width ratio of the battery 100 is 4-21.

It should be noted that the battery being roughly a cuboid means that the battery has a cuboid shape, a cube shape, a roughly cuboid shape or cube shape that is locally irregular, a generally approximate cuboid shape or cube shape that has locally a notch, a bump, a chamfer, an arc portion, or a curved portion.

As shown in FIG. 2, in the battery 100 provided in this application, each electrode core 201 includes a tab 202, and the electrode lead-out part 22 of the electrode core assembly 2 is a lead-out part formed by combining and welding the tab 202 of the electrode core 201 in the electrode core assembly 2. As shown in FIG. X, the tab 202 of the electrode core 201 can also be connected to the electrode core connector 3, for example, the two are stacked and welded, to form a power connection zone 203.

As shown in FIG. 6, in a specific embodiment of this application, the electrode lead-out part 22 of each of the electrode core assemblies 2 includes a first electrode lead-out part 221 and a second electrode lead-out part 222 for current output. The first electrode lead-out part 221 and the second electrode lead-out part 222 of at least one electrode core assembly 2 are respectively arranged at two opposite sides of the electrode core assembly 2 along the first direction. The length direction of the electrode core assembly 2 extends along the first direction. The first electrode lead-out part 221 and the second electrode lead-out part 222 can be a lead-out part formed by combining and welding the tab of the electrode core 201 in the electrode core assembly 2.

The battery 100 can be a lithium ion battery.

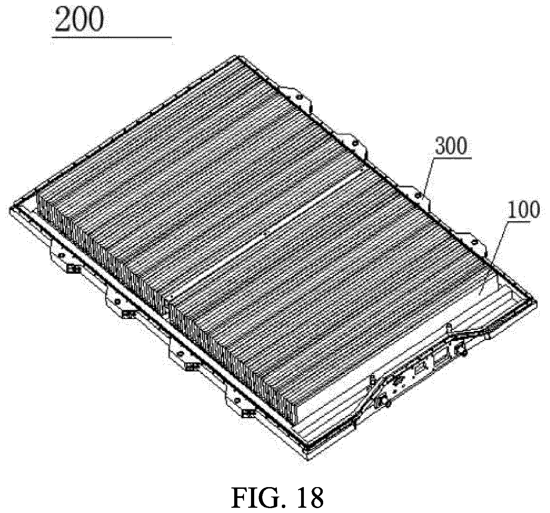

Referring to FIG. 18, this application provides a battery pack 200, which includes a tray 300 and the batteries 100 arranged on the tray 300.

In an embodiment of this application, the housing 1 is a metal housing 1, for example, aluminum housing. Certainly, it may be formed of other metals as required.

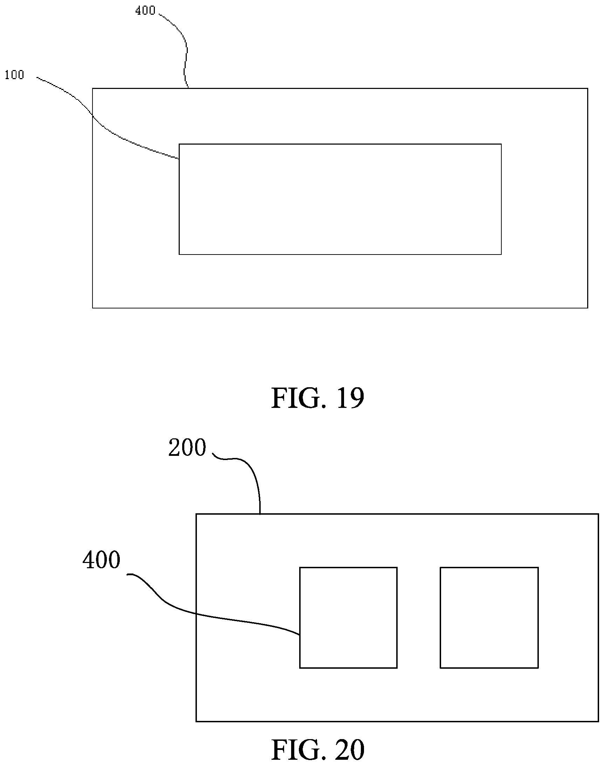

As shown in FIG. 19, this application further provides a battery module 400, which includes a number of batteries 100 provided in this application.

As shown in FIGs. 18 and 20, this application also provides a battery pack 200, which includes a number of batteries 100 provided in this application or battery modules 400 provided in this application.

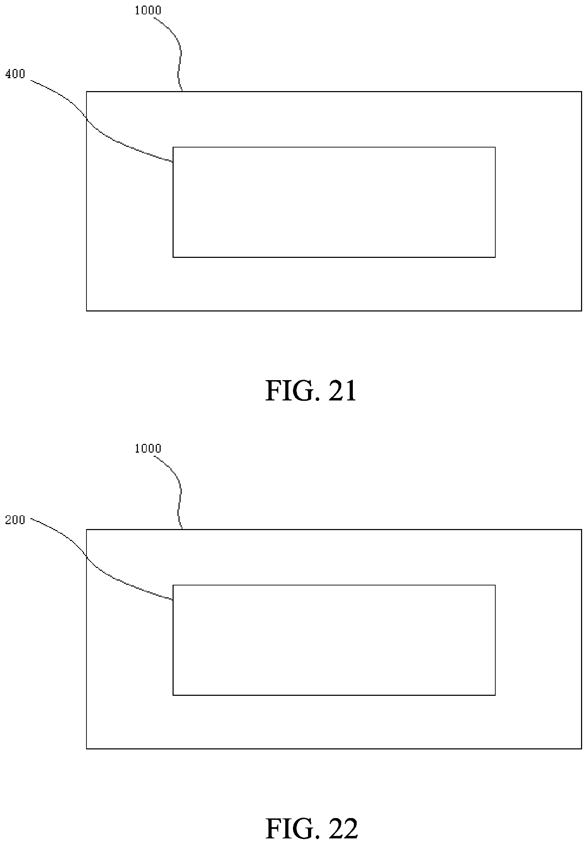

As shown in FIGs. 21 and 22, this application also provides a vehicle 1000, which includes a battery module 400 or a battery pack 200 provided in this application.

From the above, it can be seen that this application has excellent characteristics mentioned above, and has practical use due to the presence of performances that are not found in related art, making the product of this application become a product of great practical value.

The foregoing descriptions are merely exemplary embodiments of this application and are not intended to limit this application. Any modification, equivalent replacement, or improvement made within the spirit and principle of this application shall fall within the protection scope of this application.

## Claims

1. A battery, comprising:
a housing and a plurality of accommodating cavities arranged in the housing;
partition plates, wherein two adjacent accommodating cavities are isolated by each of the partition plates; an electrode core assembly is arranged in the accommodating cavity, and a plurality of electrode core assemblies are sequentially arranged along a first direction and connected in series; and
a liquid guide hole and a gas guide hole are provided on the partition plate, wherein the liquid guide hole and the gas guide hole are configured to bring two adjacent accommodating cavities at both sides of the partition plate into communication; and
a blocking mechanism, enabling the liquid guide hole to be in a settable state comprising an open state and a closed state.

2. The battery according to claim 1, wherein the housing is an integral structure extending along a first direction, the plurality of partition plates are arranged in the housing at intervals, and a side periphery of the partition plate fits with a side wall of the housing to divide the interior of the housing into the plurality of accommodating cavities; wherein a cavity wall of the accommodating cavity comprises the partition plate or an end cover arranged at the end of the accommodating cavity, and the housing located between two adjacent partition plates or between the partition plate and the end cover.

3. The battery according to claim 1 or 2, wherein the housing is an integral structure extending along the first direction, a battery core assembly comprising a separator and the partition plates is provided in the housing; the accommodating cavities are located inside the separator; the plurality of partition plates are arranged in the separator at intervals; and the side periphery of the partition plate fits with the separator to divide the interior of the separator into the plurality of accommodating cavities, wherein the cavity wall of the accommodating cavity comprises:
the partition plate or the end cover arranged at the end of the accommodating cavity, and the separator located between two adjacent partition plates or between the partition plate and the end cover.

4. The battery according to any one of claims 1 to 3, wherein the housing is an integral structure extending along the first direction; the battery core assembly comprises the separator and the partition plates is provided in the housing, the accommodating cavities are located inside the separator, the separator comprises a plurality of sub-separators arranged along the first direction, a same partition plate is connected to two adjacent sub-separators, and the cavity wall of the accommodating cavity comprises:
the sub-separator and the partition plate or the end cover arranged at the end of the sub-separator.

5. The battery according to any one of claims 1 to 4, wherein the housing comprises a plurality of sub-housings arranged along the first direction, a same partition plate is connected to two adjacent sub-housings, and the cavity wall of the accommodating cavity comprises: the sub-housing and the partition plate or the end cover located at the end of the sub-housing.

6. The battery according to any one of claims 1 to 5, wherein the battery is generally a cuboid defining with a length, a width and a thickness; wherein the length is greater than the width, and the width is greater than the thickness; and the gas guide hole and the liquid guide hole are arranged on the partition plate at intervals along the width direction of the battery.

7. The battery according to any one of claims 1 to 6, wherein when the blocking mechanism is in a first state, the liquid guide hole is in an open state; and when the blocking mechanism is in a second state, the liquid guide hole is in a closed state, wherein the blocking mechanism is switchable between the first state and the second state.

8. The battery according to claim 7, wherein before or during electrolyte injection into the battery, the blocking mechanism is in the first state, the liquid guide hole is in the open state; the liquid guide hole brings two adjacent accommodating cavities at both sides of the partition plate into communication; and after electrolyte injection into the battery, the blocking mechanism is switched from the first state to the second state, and configured to close the liquid guide hole, such that the liquid guide hole is in the closed state.

9. The battery according to claim 7 or 8, wherein during formation of the battery after electrolyte injection, the blocking mechanism is in the first state, the liquid guide hole is in the open state, and the liquid guide hole brings two adjacent accommodating cavities at both sides of the partition plate into communication; and after formation of the battery after electrolyte injection, the blocking mechanism is switched from the first state to the second state, and configured to close the liquid guide hole, such that the liquid guide hole is in the closed state.

10. The battery according to claim 8 or 9, wherein when the liquid guide hole is in the closed state, the blocking mechanism is at least partially arranged at the liquid guide hole, and configured to close the liquid guide hole, to block the communication between two adjacent accommodating cavities through the liquid guide hole.

11. The battery according to any one of claims 8 to 10, wherein the first state is such that the blocking mechanism is arranged at a first position in the battery; and the second state is such that the blocking mechanism is arranged at a second position in the battery.

12. The battery according to claim 11, wherein the partition plate is provided with a blocking mechanism holding space; the blocking mechanism is held in the blocking mechanism holding space; the blocking mechanism holding space is formed with the first position and the second position, and the blocking mechanism is movable between the first position and the second position under a force; when the blocking mechanism is at the first position, the liquid guide hole is in the open state, and the liquid guide hole brings two adjacent accommodating cavities into communication; and when the blocking mechanism is at the second position, the blocking mechanism closes the liquid guide hole, such that the liquid guide hole is in the closed state, to block the communication between two adjacent accommodating cavities via the liquid guide hole.

13. The battery according to claim 12, wherein the blocking mechanism holding space is arranged to intersect the liquid guide hole, the liquid guide hole is divided into a first liquid guide hole and a second liquid guide hole by the blocking mechanism holding space, and both the first liquid guide hole and the second liquid guide hole communicate with the blocking mechanism holding space.

14. The battery according to claim 12 or 13, wherein the blocking mechanism is attached to an inner wall of the blocking mechanism holding space by interference fit.

15. The battery according to any one of claims 12 to 14, wherein the blocking mechanism is a magnetic body with magnetism.

16. The battery according to claim 15, wherein the blocking mechanism is externally sheathed with an elastic sleeve.

17. The battery according to any one of claims 1 to 15, wherein each of the electrode core assemblies comprises a first electrode lead-out part and a second electrode lead-out part for current output, the first electrode lead-out part and the second electrode lead-out part of at least one electrode core assembly are respectively arranged on two opposite sides of the electrode core assembly along the first direction; and the length direction of the electrode core assembly extends along the first direction.

18. The battery according to any one of claims 1 to 17, wherein the battery also comprises a gas guide hole blocking mechanism, which enables the gas guide hole to be in a settable state, comprising an open state and a closed state.

19. The battery according to claim 18, wherein before or during electrolyte injection into the battery, or during formation after electrolyte injection, the gas guide hole blocking mechanism enables the gas guide hole to be in the open state, and the gas guide hole brings two adjacent accommodating cavities at both sides of the partition plate into communication.

20. The battery according to claim 18 or 19, wherein after electrolyte injection into the battery, the gas guide hole blocking mechanism closes the gas guide hole, such that the gas guide hole is in the closed state; and when the battery is overcharged or short-circuited, the gas guide hole blocking mechanism enables the gas guide hole to be in the open state, and the gas guide hole brings two adjacent accommodating cavities at both sides of the partition plate into communication.

21. The battery according to any one of claims 1 to 20, wherein two adjacent electrode core assemblies are serially connected by an electrode core connector, and the electrode core connector runs through the partition plate between the two adjacent electrode core assemblies.

22. The battery according to claim 21, wherein the electrode core connector is integrally molded with the partition plate.

23. The battery according to claim 21 or 22, wherein the electrode core connector comprises a copper connection portion and an aluminum connection portion connected with the copper connection portion, wherein the copper connection portion and the aluminum connection portion are connected at a position inside the partition plate.

24. A battery, comprising a housing and a plurality of accommodating cavities located in the housing;
partition plates, wherein two adjacent accommodating cavities are isolated by the partition plate, an electrode core assembly is arranged in the accommodating cavity, and a plurality of electrode core assemblies are sequentially arranged along a first direction and connected in series; and
a liquid guide hole and a gas guide hole are provided on the partition plate, wherein the liquid guide hole and the gas guide hole are configured to bring two adjacent accommodating cavities at both sides of the partition plate into communication; and
a blocking mechanism, at least partially located at the liquid guide hole, and closing the liquid guide hole, to block the communication between two adjacent accommodating cavities through the liquid guide hole.

25. The battery according to claim 24, wherein the housing has an integral structure extending along the first direction, the plurality of partition plates are arranged in the housing at intervals, and a side periphery of the partition plate fits with a side wall of the housing to divide the interior of the housing into the plurality of accommodating cavities, wherein a cavity wall of the accommodating cavity comprises:
the partition plate or an end cover located at an end of the accommodating cavity, and the housing located between two adjacent partition plates or between the partition plate and the end cover.

26. The battery according to claim 25, wherein the housing has an integral structure extending along the first direction, a battery core assembly comprising a separator and the partition plates is provided in the housing, the accommodating cavities are located inside the separator, the plurality of partition plates are arranged in the separator at intervals, and the side periphery of the partition plate fits with the separator to divide the interior of the separator into the plurality of accommodating cavities, wherein the cavity wall of the accommodating cavity comprises:
the partition plate or the end cover located at the end of the accommodating cavity, and the separator located between two adjacent partition plates or between the partition plate and the end cover.

27. The battery according to any one of claims 24 to 26, wherein the housing has an integral structure extending along the first direction, the battery core assembly comprising the separator and the partition plates is provided in the housing, the accommodating cavities are located inside the separator, the separator comprises a plurality of sub-separators arranged along the first direction, a same partition plate is connected to two adjacent sub-separators, and the cavity wall of the accommodating cavity comprises the sub-separator and the partition plate or the end cover located at the end of the sub-separator.

28. The battery according to any one of claims 24 to 27, wherein at least one of the partition plates has a blocking mechanism holding space provided thereon, wherein the blocking mechanism is held in the blocking mechanism holding space; the blocking mechanism holding space is formed with a first position and a second position for holding the blocking mechanism, the blocking mechanism is at the second position, and the blocking mechanism is switched from the second position to the first position or from the first position to the second position under a force.

29. The battery according to claim 28, wherein the blocking mechanism holding space is arranged to intersect the liquid guide hole, the liquid guide hole is divided into a first liquid guide hole and a second liquid guide hole by the blocking mechanism holding space, and both the first liquid guide hole and the second liquid guide hole communicate with the blocking mechanism holding space.

30. The battery according to claim 28 or 29, wherein the blocking mechanism is a magnetic body with magnetism.

31. The battery according to claim 30, wherein the blocking mechanism is externally sheathed with an elastic sleeve.

32. The battery according to any one of claims 24 to 31, wherein two adjacent electrode core assemblies are serially connected by an electrode core connector, and the electrode core connector runs through the partition plate between the two adjacent electrode core assemblies.

33. The battery according to claim 32, wherein the electrode core connector is integrally molded with the partition plate.

34. The battery according to claim 32 or 33, wherein the electrode core connector comprises a copper connection portion and an aluminum connection portion connected with the copper connection portion, wherein the copper connection portion and the aluminum connection portion are connected at a position inside the partition plate.

35. The battery according to any one of claims 24 to 34, wherein each of the electrode core assemblies comprises a first electrode lead-out part and a second electrode lead-out part for current output, the first electrode lead-out part and the second electrode lead-out part of at least one electrode core assembly are respectively arranged on two opposite sides of the electrode core assembly along the first direction, and the length direction of the electrode core assembly extends along the first direction.

36. A battery module, comprising a plurality of batteries according to any one of claims 1 to 35.

37. A battery pack, comprising a plurality of batteries according to any one of claims 1 to 35 or a plurality of battery module according to claim 36.

38. A vehicle, comprising the battery module according to claim 36 or the battery pack according to claim 37.
